# EUROPÄISCHE PATENTANMELDUNG

(11) **EP 3 037 695 A1**
(43) Veröffentlichungstag der Anmeldung: **29.06.2016**
(21) Anmeldenummer: 15003489.0
(22) Anmeldetag: 08.12.2015
(51) Int. Cl.: F16J 15/02

(54) **DICHTEINSATZ FÜR EINEN WASSERABLAUF**

(30) Priorität: 23.12.2014 DE 102014119584
(71) Anmelder: wedi GmbH, 48282 Emsdetten (DE)
(72) Erfinder: Wedi, Stephan, 48282 Emsdetten (DE)
(74) Vertreter: Ellberg, Nils

(57) **Zusammenfassung**

Die Erfindung betrifft einen Dichteinsatz (100) umfassend:
- einen Ringkorpus (1) mit einer Seitenwand (9), einem umlaufenden Kragen (13)
- wenigstens eine an der Seitenwand (9) angeordnete, nach außen zeigende Dichtlippe (3, 3', 3"),
- wobei die Dichtlippe (3, 3', 3") in einem längsaxialen Schnitt (Q) durch den Dichteinsatz (100) jeweils eine konische, in einen Scheitel (8) auslaufende Kontur (K) aufweist, welche in eine Außenmantelfläche (M) des Ringkorpus (1) übergeht,

Gemäß Erfindung ist:
- an der Außenmantelfläche (M) des Ringkorpusses wenigstens eine umlaufende, wulstartige Verdickung (5) angeordnet ist
- die Dichtlippe (3, 3', 3") eine Höhe (H) aufweist, die größer ist, als ein zwischen der Verdickung (5) vorgesehener Abstand (B),

so dass sich eine in Richtung Verdickung (5) umknickende Dichtlippe (3, 3', 3") an der Verdickung (5) abstützt.

## Beschreibung

Die Erfindung betrifft einen Dichteinsatz für einen Wasserablauf, umfassend:
- einen Ringkorpus mit einer Seitenwand, einem umlaufenden Kragen
- wenigstens eine an der Seitenwand angeordnete, nach außen zeigende Dichtlippe,
- wobei die Dichtlippe in einem längsaxialen Schnitt durch den Dichteinsatz jeweils eine konische, in einen Scheitel auslaufende Kontur aufweist, welche in eine Außenmantelfläche des Ringkorpus übergeht.

Solche Dichteisätze werden beispielsweise eingesetzt um einen in ein Duschbodenelement eingesetzten Ablauftopf abzudichten.

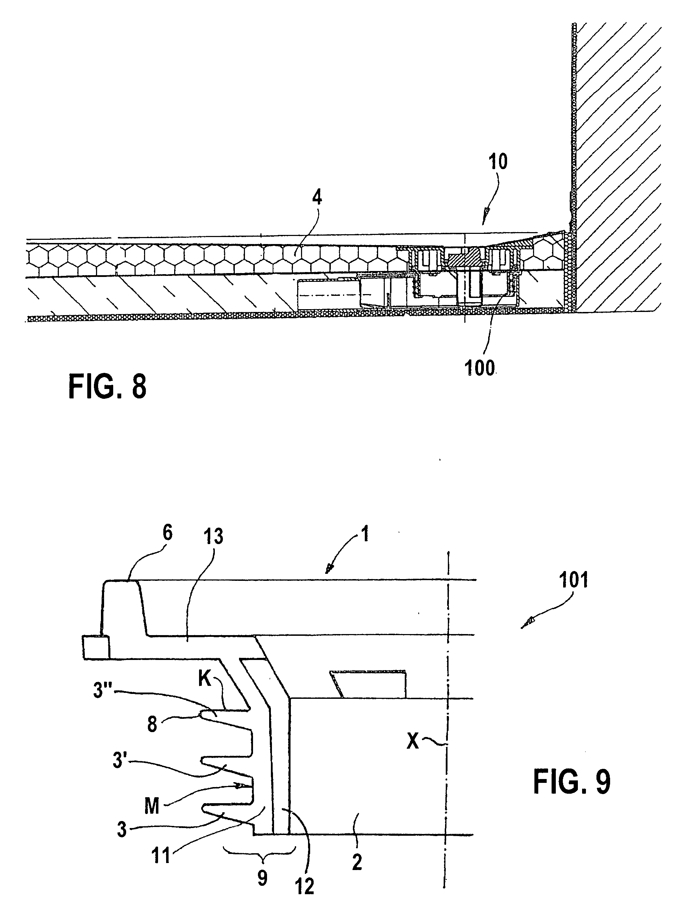

Ein Dichteinsatz 101 gemäß dem Stand der Technik (vgl. Fig. 9) ist durch einen Ringkorpus 1 gebildet, welcher eine Seitenwand 9 und einen Kragen 13 mit einem nach oben ragenden, in seinem Querschnitt etwa trapezförmigen Dichtring 6 umfasst, dessen kleinere Trapezbasis nach oben zeigt. Die Außenmantelfläche M der Seitenwand 9 ist zylindrisch.

Die Begriffe: "oben", "obere", "unten", "untere" bzw. "unterhalb" beziehen sich auf die Anordnung des Dichteinsatzes 101 in seiner Einbaulage, bei der der Kragen 13 mit dem Dichtring 6 dem Duschbodenelement zugewandt ist.

Die Seitenwand 9 besteht aus einer äußeren, elastomeren Wandungsschicht 11 mit drei übereinander liegenden Dichtlippen 3, 3', 3" sowie aus einer inneren, steiferen Wandungsschicht 12. Die beiden Wandungsschichten 11, 12 können miteinander fest, untrennbar verbunden sein, oder die Wandungsschicht 11 ist auf die Wandungsschicht 12 nachträglich aufgeschoben. Der bekannte Dichteinsatz hat sich in der Praxis gut bewährt, jedoch besteht Bedarf an einer Verbesserung der Dichteigenschaften. Der Dichteinsatz 101 zeichnet sich durch relativ schmale Dichtlippen von demselben Querschnitt aus. Die Dichtlippen können bei der Montage des Ringkorpus und anschließendem Anziehen mit Schraubelementen umknicken.

Es stellt sich daher die Aufgabe, einen verbesserten, neuartigen Dichteinsatz der eingangs genannten Art zu konzipieren, dessen Dichtlippen stabiler sind und sich beim Einmontieren in den Wasserablauf zum einen kontrolliert deformieren und zum anderen eine hohe Rückstellkraft in ihre Ausgangsposition aufweisen, so dass die äußeren Bereiche der Dichtlippen einen dauerhaft hohen Druck auf die abzudichtende Verbindungsstelle ausüben.

Diese Aufgabe ist durch einen gattungsgemäßen Dichteinsatz gelöst, bei dem
- an der Außenmantelfläche des Ringkorpusses wenigstens eine umlaufende, wulstartige Verdickung angeordnet ist,
- die Dichtlippe eine Höhe aufweist, die größer ist, als ein zwischen der Verdickung vorgesehener Abstand,
so dass sich eine in Richtung Verdickung umknickende Dichtlippe an der Verdickung abstützt.

Insbesondere beim Einsetzen des Dichteinsatzes in einen Wasserablauf besteht die Gefahr, dass beispielsweise durch ein schräges bzw. zur Einlauföffnung nicht koaxiales Einsetzen die Dichtlippen ungleichmäßig belastet werden und infolge dessen umknicken und sich an die Außenmantelfläche des Ringkorpusses anlegen. Durch die erfindungsgemäße Verdickung wird ein Umknicken derDichtlippebegrenzt, sobald die in Richtung Verdickung umknickende Dichtlippe mit ihrem Scheitelbereich die Verdickung bzw. deren Oberfläche kontaktiert. Die Begrenzung der Umknickung begrenzt gleichzeitig die durch das Umknicken bewirkten Zug- und Druckkräfte in der Dichtlippe. Hierdurch wird verhindert, dass der elastische Spannungsbereich in der Dichtlippe überschritten wird und sich an der Dichtlippe eine dauerhafte Verformung einstellt, die eine Rückkehrt der Dichtlippe in ihre Ausgangsposition erschwert oder sogar gänzlich verhindert. So kann die zunächst verformte, elastische Dichtlippe infolge der Rückstellkraft bei nachlassender Krafteinwirkung wieder ihre ursprüngliche Form einnehmen.

Vorzugsweise verjüngen sich die Kegelmantel-Abschnitte in Richtung Kragen, so dass die Seitenwand ihre größte Dicke bei einer Basis der unteren Dichtlippen annimmt. Der äußere Durchmesser der Dichtlippen ist aus funktionalen Gründen größer als der Durchmesser einer Öffnung, in welche der Dichteinsatz eingesetzt wird. Da der Kragen des Dichteinsatzes die Dichtlippen überragt, kann der Dichteinsatz nur in einer Richtung, nämlich mit den Dichtlippen zuerst, in die Öffnung eingesetzt werden. Hierbei werden die Dichtlippen in ihrem Außenbereich entgegen der Einsetzrichtung verformt. Die sich an die Dichtlippen anschließenden Kegelmantel-Abschnitte stützen hierbei die Dichtlippen ab. Beim Herausziehen des Dichteinsatzes werden die Dichtlippen in die entgegengesetzte Richtung verformt. Im Ergebnis ist hierdurch der Widerstand und die Rückstellkraft beim Einsetzen und bei eingesetztem Dichteinsatz relativ hoch und beim Ausbau, beispielsweise für Reparaturarbeiten, relativ niedrig.

Die Dichtlippen können mit ihren Scheiteln bzw. Außenkanten eine zylindrische oder konische Fläche beschreiben, d. h. sie können in einem gemeinsamen oder sich stets verkleinernden bzw. vergrößernden Radius, ausgehend von einer Längsachse des Ringkorpus, liegen. In Abhängigkeit vom Einsatzzweck kann somit vorgesehen sein, dass alle Dichtlippen einen gleich großen äußeren Durchmesser aufweisen. Es kann aber auch vorgesehen sein, dass der Durchmesser von Dichtlippe zu Dichtlippe größer oder kleiner wird, so dass Dichtlippen gemeinsam eine Art Konus ausbilden.

Vorzugsweise entspricht die Breite der Dichtlippen, gemessen zwischen der Basis der Dichtlippe und ihrem Scheitel etwa dem Abstand zwischen zwei übereinander liegenden Scheiteln.

Die äußere, elastomere Wandungsschicht kann aus Thermoplasten hergestellt sein, welche beispielsweise auf die härtere innere Wandungsschicht auf bekannte Weise angespritzt sind, oder als vorgefertigtes Formteil nachträglich aufgeschoben wird. Die innere Wandungsschicht kann ebenso aus Thermoplasten bestehen, deren Härtegrad entsprechend eingestellt ist. Die innere Wandungsschicht kann auch aus einem Duroplast oder Metall bestehen.

Schließlich ist es möglich, die die Dichtlippen aufweisende Seitenwand einstückig mit dem Kragen und dem oberen Dichtring anzufertigen. Dabei können die für den Dichtkontakt vorgesehenen Bereiche, wie Dichtlippen und Dichtring wenigstens teilweise elastisch verformbar sein. Der Härtegrad des übrigen Materials des Ringkorpus kann so eingestellt sein, dass die Stabilität des Dichteinsatzes gewährt ist.

Die Dichteinsätze weisen eine an den Ablauftopf angepasste Kontur auf. Insbesondere kann diese Kontur kreisrund oder oval sein.

Ausführungsbeispiele der Erfindung sind anhand der Zeichnung näher erläutert. Die Figuren zeigen:
- Fig. 1: einen ovalen Dichteinsatz gemäß Erfindung in einer Draufsicht auf seinen Dichtring;
- Fig. 2: einen Schnitt A-A gemäß Fig. 1;
- Figuren 3 und 4: einen kreisrunden Dichteinsatz gemäß Erfindung, jeweils in einer perspektivischen Ansicht;
- Fig. 5: einen vergrößerten längsaxialen Schnitt durch den Dichteinsatz gemäß Erfindung, in einer ersten Ausführung;
- Fig. 6: einen vergrößerten längsaxialen Schnitt durch den Dichteinsatz gemäß Erfindung, in einer zweiten, optimierten Ausführung;
- Fig. 7: einen vergrößerten längsaxialen Schnitt durch den Dichteinsatz, in einer massiven Ausführung;
- Fig. 8: Einbaulage des Dichteinsatzes gemäß Erfindung, in einem schematischen Schnitt im Bodenbereich einer Duschzelle; und
- Fig. 9: einen Dichteinsatz gemäß dem Stand der Technik, in einem Schnitt.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

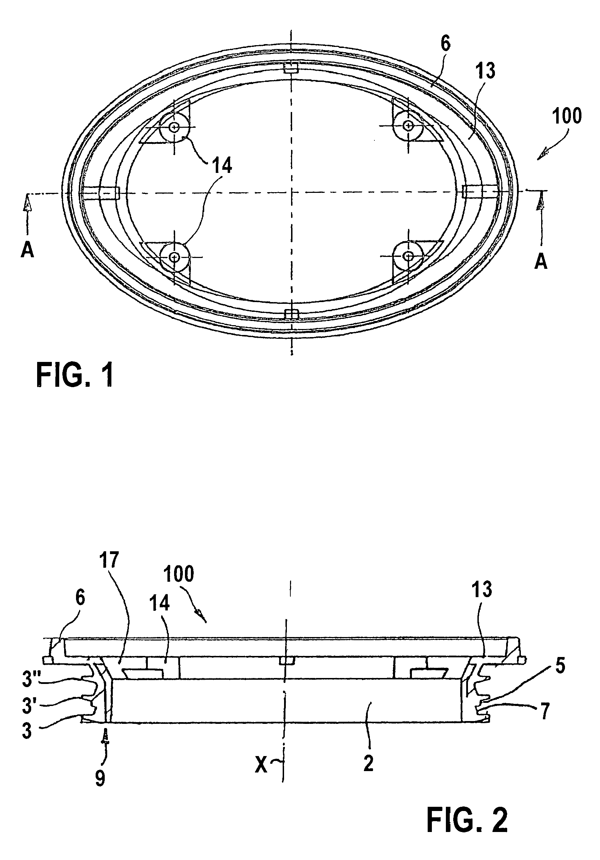

In den Figuren 1 und 2 ist ein Dichteinsatz 100 in seiner ovalen Ausführungsform dargestellt, umfassend den Ringkorpus 1 mit Seitenwand 9 und dem umlaufenden oberen Kragen 13 mit nach oben ragendem Dichtring 6. Die Seitenwand 9 bildet eine zentrale Durchgangsöffnung 2.

Die Seitenwand 9 besteht aus zwei zusammengefügten, bzw. übereinander geschobenen Wandungsschichten 11, 12, von denen die eine, äußere Wandungsschicht 11 elastomer ist und drei übereinander liegende Dichtlippen 3, 3', 3" mit einschließt. Die andere, innere Wandungsschicht 12 besteht aus einem stabilen, relativ harten Material.

An einem schrägen, oberen Abschnitt 17 der Seitenwand 9 sind an sich bekannte, nach innen gekröpfte Schraubaufnahmeelemente 14 angeordnet.

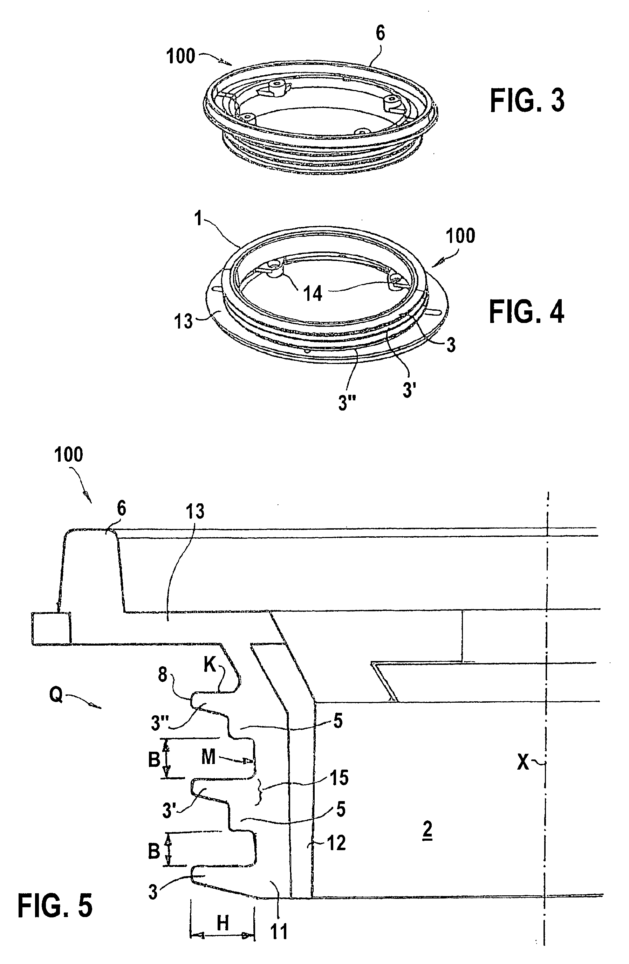

Die Fig. 5 zeigt eine optimierte Geometrie (Umriss) der Seitenwand 9 in einem längsaxialen Schnitt Q durch den Ringkorpus 1. Der Dichteinsatz 100 weist drei Dichtlippen 3, 3', 3" auf. Die Dichtlippen 3, 3', 3" weisen jeweils eine konische, in einen Scheitel 8 auslaufende Kontur K auf, welche in eine Außenmantelfläche M der Seitenwand 9, übergeht. Wie die Fig. 5 zeigt, sind die Dichtlippen 3, 3', 3" dicker gegenüber den Dichtlippen gemäß dem Stand der Technik (vergl. Fig. 9) ausgeführt. Zwischen den Dichtlippen 3 und 3' sowie zwischen den Dichtlippen 3' und 3" ist jeweils eine Verdickung 5 vorgesehen. Die Verdickungen 5 gehen jeweils in die Basis 15 der darüber liegenden Dichtlippe 3' bzw. 3" über. Zur darunter liegenden Dichtlippe 3 bzw. 3' weisen sie einen Abstand B auf, der kleiner ist als die Höhe H der Dichtlippen. Damit wird gewährleistet, dass eine in Richtung Verdickung umknickende Dichtlippe, insbesondere auch bei ungleichmäßiger bzw. einseitiger Belastung maximal soweit umknicken kann, bis ihr Scheitelbereich die Verdickung 5 kontaktiert und von dieser abgestützt wird. Je nach Bedarf können ein oder mehrere Verdickungen 5 am Dichteinsatz 100 vorgesehen sein.

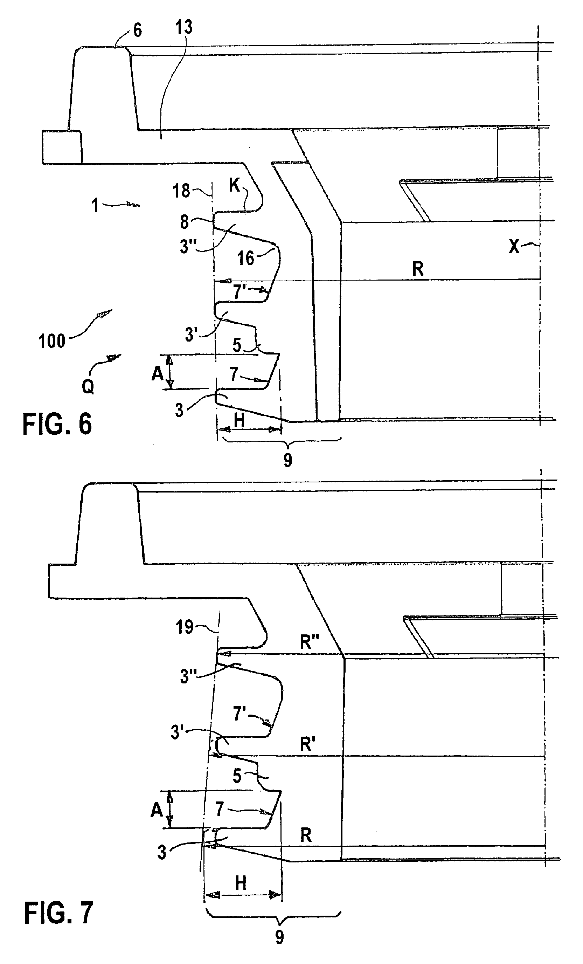

Die Figuren 6 und 7 zeigen eine besonders vorteilhafte Ausführung, bei der sich an die wulstartige Verdickung 5 sich nach oben verjüngende Kegelmantel-Abschitte 7, 7' anschließen. Die Dichtlippe 3 weist analog zu der in Fig. 5 beschriebenen Ausführung eine Höhe H auf, die größer ist als ein zwischen der Dichtlippe 3 und der Verdickung 5 vorgesehener Abstand B.

Da die Umknickgefahr bei der ersten in die Öffnung eines Bodens oder einer Bodenplatte einzusetzenden Dichtlippe 3 am größten ist, ist im in den Figuren 5 und 6 gezeigten Ausführungsbeispiel eine wulstartige Verdickung 5 nur unterhalb der zweiten Dichtlippe 3' vorgesehen. Nicht ausgeschlossen ist jedoch, dass auch die Dichtlippen 3' und/oder 3" durch weitere wulstartige Verdickungen abgestützt werden.

Gemäß Figuren 6 und 7 liegen die Scheitel 8 der übereinander liegenden Dichtlippen 3, 3', 3" entlang einer mit 18 bezeichneten Linie, die in einem gemeinsamen Radius R, bemessen von einer Längsachse X des Ringkorpus 1, also parallel zur Längsachse X angeordnet ist.

Die Fig. 7 zeigt aber auch eine abweichende Ausführung, bei der die Scheitel 8 (mit Strichlinie bezeichnet) entlang einer leicht geneigten Linie 19 angeordnet sind. Demnach beschreiben die Scheitel 8 sich nach oben verkleinernde Radien R, R', R", ausgehend von der besagten Längsachse X des Ringkorpus 1.

Die Dichtlippen 3, 3', 3" können gestufte Härte- bzw. Weichgrade aufweisen. Beispielsweise kann die obere Dichtlippe etwas härter als die untere ausgeführt sein.

Die Figuren 3 und 4 zeigen den Dichteinsatz 100 in seiner kreisrunden, rotationssymmetrischen Ausführung. Die Bezugszahlen des kreisrunden Dichteinsatzes entsprechen den bereits beschriebenen Teilen des ovalen Dichteinsatzes.

Die Fig. 8 zeigt den Dichteinsatz 100 gemäß Erfindung, eingebaut in einen waagerechten Wasserablauf 10 einer barrierefreien Dusche. Mit Bezugszahl 4 ist ein plattenförmiges Duschbodenelement bezeichnet.

**Bezugszeichenliste:**

| | |
|---|---|
| 1 | Ringkorpus |
| 2 | Durchgangsöffnung |
| 3, 3', 3" | Dichtlippe |
| 4 | Duschbodenelement |
| 5 | Verdickung |
| 6 | Dichtring |
| 7, 7' | Kegelmantel-Abschnitt (Schräge) |
| 8 | Scheitel |
| 9 | Seitenwand |
| 10 | Wasserablauf |
| 11 | Wandunqsschicht |
| 12 | Wandungsschicht |
| 13 | Kragen |
| 14 | Schraubaufnahmeelement |
| 15 | Basis |
| 16 | konkave Rundung |
| 17 | Abschnitt (v. 9) |
| 18 | Linie |
| 19 | Linie |
| | |
| 100; 101 | Dichteinsatz |
| | |
| B | Abstand |
| H | Höhe |
| M | Außenmantelfläche |
| K | Kontur |
| Q | Schnitt |
| A-A | Schnitt |
| R, R', R" | Radius |
| X | Längsachse |

## Patentansprüche

1. Dichteinsatz (100) für einen Wasserablauf (10), umfassend:
- einen Ringkorpus (1) mit einer Seitenwand (9), einem umlaufenden Kragen (13)
- wenigstens eine an der Seitenwand (9) angeordnete, nach außen zeigende Dichtlippe (3, 3', 3"),
- wobei die Dichtlippen (3, 3', 3") in einem längsaxialen Schnitt (Q) durch den Dichteinsatz (100) jeweils eine konische, in einen Scheitel (8) auslaufende Kontur (K) aufweist, welche in eine Außenmantelfläche (M) des Ringkorpus (1) übergeht,
**dadurch gekennzeichnet, dass**
- an der Außenmantelfläche (M) des Ringkorpusses wenigstens eine umlaufende, wulstartige Verdickung (5) angeordnet ist und
- die Dichtlippe (3, 3', 3") eine Höhe (H) aufweist, die größer ist, als ein zwischen der Verdickung (5) vorgesehener Abstand (B),
so dass sich eine in Richtung Verdickung (5) umknickende Dichtlippe (3, 3', 3") an der Verdickung (5) abstützt.

2. Dichteinsatz (100) nach Anspruch 1, **dadurch gekennzeichnet, dass** die Außenmantelfläche (M) wenigstens einen zwischen den Dichtlippen (3, 3', 3") angeordneten Kegelmantel-Abschnitt (7, 7') aufweist.

3. Dichteinsatz (100) nach Anspruch 2, **dadurch gekennzeichnet, dass** die Kegelmantel-Abschnitte (7, 7') sich in Richtung Kragen (13) verjüngen.

4. Dichteinsatz (100) nach einem der Ansprüche 1 bis 3, **dadurch gekennzeichnet, dass** die Scheitel (8) der übereinander liegenden Dichtlippen (3, 3', 3") - im längsaxialen Schnitt (Q) durch den Dichteinsatz (100) - in einem gemeinsamen Radius (R), ausgehend von einer Längsachse (X) des Ringkorpus (1), liegen.

5. Dichteinsatz (100) nach einem der Ansprüche 1 bis 3, **dadurch gekennzeichnet, dass** die Scheitel (8) der übereinander liegenden Dichtlippen (3, 3', 3") - im längsaxialen Schnitt (Q) durch den Dichteinsatz (100) - in unterschiedlichen Radien (R, R', R"), ausgehend von einer Längsachse (X) des Ringkorpus (1), liegen.

6. Dichteinsatz (100) nach einem der Ansprüche 1 bis 5, **dadurch gekennzeichnet, dass** die Seitenwand (9) aus zwei miteinander fest gefügten Wandungsschichten (11; 12) besteht.

7. Dichteinsatz (100) nach Anspruch 6, **dadurch gekennzeichnet, dass** die eine Wandungsschicht (11) aus elastomerem Material besteht und die Dichtlippen (3, 3', 3") mit einschließt, dagegen die andere Wandungsschicht (12) aus härterem Material als das der elastomeren Wandungsschicht (11) besteht.

8. Dichteinsatz (100) nach einem der Ansprüche 1 bis 7, **dadurch gekennzeichnet, dass** der Ringkorpus (1) in einem Materialstück gefertigt ist, wobei die für den Dichtkontakt vorgesehenen Bereiche, wie Dichtlippen (3, 3', 3"), wenigstens teilweise elastisch verformbar sind, dagegen das übrige Material des Ringkorpus (1) steifer ist.

9. Dichteinsatz (100) nach einem der Ansprüche 1 bis 8, **dadurch gekennzeichnet, dass** der Ringkorpus (1) in Draufsicht auf den Dichtring (6) kreisrund ist.

10. Dichteinsatz (100) nach einem der Ansprüche 1 bis 8, **dadurch gekennzeichnet, dass** der Ringkorpus (1) in Draufsicht auf den Dichtring (6) oval ist.
